# EUROPEAN PATENT APPLICATION

(11) **EP 4 826 936 A1**
(43) Date of publication of application: **21.10.2026**
(21) Application number: 25170249.4
(22) Date of filing: 14.04.2025
(51) Int. Cl.: H02J 1/10, F02N 11/12, H02J 9/06

(54) **INTELLIGENT AUTOMOTIVE EMERGENCY START CLAMP WITH OPTICAL SENSING ILLUMINATION**

(71) Applicant: Luo, Wuqiang, Dongguan Guangdong Province (CN)
(72) Inventor: LUO, Wuqiang, Dongguan (CN)
(74) Representative: Plavsa, Olga

(57) **Abstract**

An intelligent automotive emergency start clamp with optical sensing illumination includes a battery clamp, a battery clamp control box, and an intelligent sensing illumination circuit. The battery clamp control box wirelessly communicates with a main control unit of the emergency power supply, receives a starting activation signal transmitted by the main control unit, and generates a power enable signal based on the received signal, and transmits it to the battery clamp, thereby providing emergency starting power to the vehicle engine via vehicle battery cable terminals. The intelligent sensing illumination circuit is electrically connected to the emergency power supply via the battery clamp control box to obtain power supply therefrom. It automatically detects the ambient brightness level of the environment where the battery clamp control box is located and provides auxiliary lighting during the emergency starting operation according to the ambient brightness level.

## Description

### TECHNICAL FIELD

The present disclosure relates to the technical field of automotive emergency power supplies and electrical signal processing, and more particularly to an intelligent automotive emergency start clamp with optical sensing illumination.

### BACKGROUND

An automotive emergency power supply is a portable power device typically used to start a vehicle engine by clamping onto vehicle battery cable terminals. It is also referred to as a vehicle jump starter, emergency power pack, or automotive charger. Automotive emergency power supplies generally include: a battery module, a controller, and a power management system, which are primarily designed to convert direct current (DC) power from the battery into current and voltage outputs suitable for starting the vehicle engine. These power supplies are typically equipped with clamps and USB interfaces, among other connection options, which may attach to the vehicle battery cable terminals to start the engine or charge electronic devices such as mobile phones and tablets. The emergency power supply connects to the clamps, the positive clamp connects to the positive terminal of the vehicle battery cable terminals, and the negative clamp connects to the negative terminal of the vehicle battery cable terminals. Since these terminals are electrically connected to the power terminal of the vehicle engine, the emergency power supply can deliver a starting signal to the vehicle engine when the battery is in an abnormal state (e.g., under-voltage). However, in practical applications, factors such as lighting conditions frequently lead to reverse polarity connections, resulting in short-circuit hazards.

In view of the foregoing, existing automotive emergency power supplies are susceptible to ambient lighting conditions and prone to reverse polarity connection, which may result in short-circuit failures.

### SUMMARY

To address the aforementioned disadvantages in the prior art, the present disclosure provides an intelligent automotive emergency start clamp with optical sensing illumination, which achieves automatic light sensing, provides auxiliary operational lighting during the emergency starting operation, reduces the risk of reverse-connection short circuits, wirelessly communicates with a main control unit of an emergency power supply, reduces wiring complexity, and simplifies the structure of the intelligent clamp.

An intelligent automotive emergency start clamp with optical sensing illumination is provided in this disclosure. The intelligent automotive emergency start clamp with optical sensing illumination includes a battery clamp, a battery clamp control box, and an intelligent sensing illumination circuit.

The battery clamp is configured to electrically connect to vehicle battery cable terminals during an emergency starting operation of a vehicle, and the vehicle battery cable terminals are electrically connected to a vehicle engine. The battery clamp control box is configured to electrically connect to an emergency power supply during the emergency starting operation and to wirelessly communicate with a main control unit of the emergency power supply.

The battery clamp control box receives a starting activation signal transmitted by the main control unit of the emergency power supply, generates a power enable signal based on the starting activation signal, and transmits the power enable signal to the battery clamp to provide emergency starting power to a power terminal of the vehicle engine via the vehicle battery cable terminals.

The intelligent sensing illumination circuit is disposed on the battery clamp control box and electrically connected to the emergency power supply to obtain power supply. The intelligent sensing illumination circuit automatically detects an ambient brightness level of a current environment where the battery clamp is located after obtaining the power supply from the emergency power supply and provides auxiliary operational lighting during the emergency starting operation according to the ambient brightness level.

Compared to the prior art, the present disclosure provides the following beneficial effects:

The intelligent automotive emergency start clamp with optical sensing illumination provided by the present disclosure includes: a battery clamp, a battery clamp control box, and an intelligent sensing illumination circuit. The battery clamp is electrically connected to vehicle battery cable terminals during an emergency starting operation of a vehicle. The vehicle battery cable terminals are electrically connected to a vehicle engine. The battery clamp control box is electrically connected to an emergency power supply during the emergency starting operation and wirelessly communicates with a main control unit of the emergency power supply. The battery clamp control box receives an activation signal transmitted by the main control unit of the emergency power supply, generates a power enable signal based on the starting activation signal, and transmits the power enable signal to the battery clamp to provide emergency starting power to the power terminal of the vehicle engine via the vehicle battery cable terminals. The intelligent sensing illumination circuit is disposed on the battery clamp control box and electrically connected to the emergency power supply to obtain power supply therefrom. After obtaining the power supply from the emergency power supply, the intelligent sensing illumination circuit automatically detects an ambient brightness level of a current environment where the battery clamp is located and provides auxiliary operational lighting during the emergency starting operation according to the ambient brightness level. In this way, the intelligent automotive emergency start clamp with optical sensing illumination provided by this disclosure achieves automatic light sensing, provides auxiliary operational lighting during the emergency starting operation, reduces the risk of reverse-connection short circuits, wirelessly communicates with a main control unit of an emergency power supply, reduces wiring complexity, and simplifies the structure of the intelligent clamp.

### BRIEF DESCRIPTION OF DRAWINGS

The accompanying drawings described herein are used to provide further understanding of this disclosure and constitute a part of this disclosure. The exemplary embodiments and descriptions thereof are used to explain this disclosure and do not constitute an undue limitation on this disclosure. This disclosure will be described in detail below in an exemplary and non-limiting manner with reference to the drawings. In the drawings, like reference numerals designate identical or similar components or parts. It should be understood by those skilled in the art that the drawings are not necessarily drawn to scale. In the accompanying drawings:
FIG. 1 is a schematic circuit diagram illustrating wireless communication between a battery clamp and a main control unit of an emergency power supply via a battery clamp control box of an intelligent automotive emergency start clamp with optical sensing illumination according to the present disclosure;
FIG. 2 is a schematic circuit diagram of an intelligent sensing illumination circuit of an intelligent automotive emergency start clamp with optical sensing illumination according to the present disclosure.

Reference Numerals:
100: Battery clamp; 200: Battery clamp control box; 300: Intelligent sensing illumination circuit.

### DETAILED DESCRIPTION

To make those skilled in the art better understand the solutions of the present disclosure, the following clearly and completely describes the technical solutions of the present disclosure with reference to specific embodiments of the present disclosure and corresponding accompanying drawings. Apparently, the described embodiments are merely a part rather than all of the embodiments of the present disclosure. Based on the embodiments of the present disclosure, all other embodiments obtained by a person of ordinary skill in the art without creative efforts fall within the protection scope of the present disclosure.

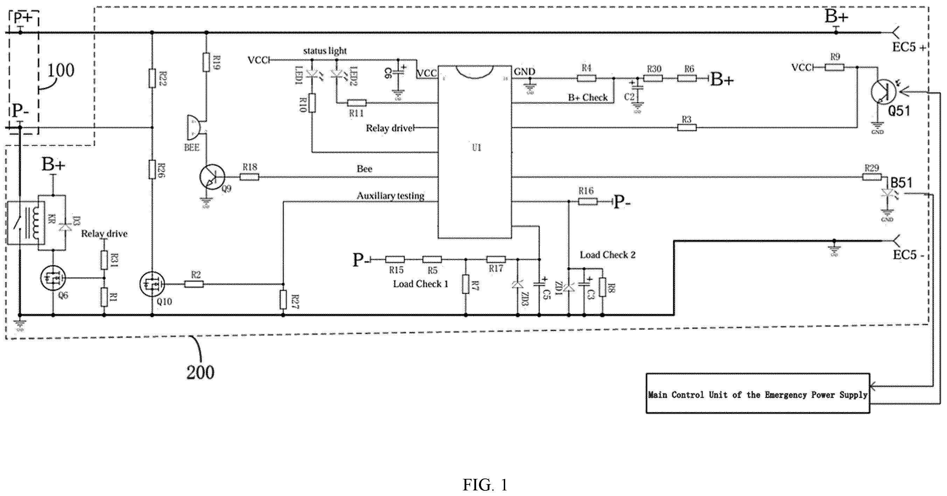

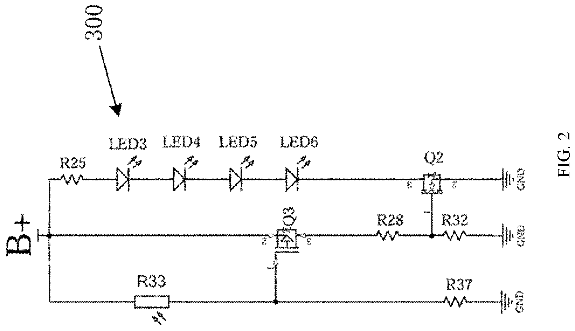

With reference to FIGS. 1-2, an embodiment of the present disclosure provides an intelligent automotive emergency start clamp with optical sensing illumination, including a battery clamp, a battery clamp control box, and an intelligent sensing illumination circuit.

The battery clamp is configured to be electrically connected to vehicle battery cable terminals during an emergency starting operation of a vehicle. For example, a positive terminal P+ of the battery clamp, a negative terminal P- of the battery clamp, and the vehicle battery cable terminals are electrically connected. The vehicle battery cable terminals are electrically connected to a vehicle engine.

The battery clamp control box is configured to be electrically connected to an emergency power supply during the emergency starting operation and to wirelessly communicate with a main control unit of the emergency power supply. The battery clamp control box receives a starting activation signal transmitted by the main control unit of the emergency power supply, generates a power enable signal based on the starting activation signal, and transmits the power enable signal to the battery clamp to provide emergency starting power to a power terminal of the vehicle engine via the vehicle battery cable terminals. The wireless communication includes, but is not limited to, optical-to-electrical conversion, Wi-Fi, and Bluetooth communication.

The intelligent sensing illumination circuit is disposed on the battery clamp control box and electrically connected to the emergency power supply to obtain power supply therefrom. After obtaining the power supply from the emergency power supply, the intelligent sensing illumination circuit automatically detects an ambient brightness level of a current environment where the battery clamp is located and provides auxiliary operational lighting during the emergency starting operation according to the ambient brightness level.

It should be noted that in this embodiment, when the battery clamp is in a low-light environment, the intelligent sensing illumination circuit automatically detects the brightness level of the current environment and provides auxiliary lighting according to the ambient brightness. This means that when the ambient light is dim, the area near the battery clamp will be illuminated, reducing incorrect connections caused by insufficient lighting and lowering the risk of reverse connection. Conventional automotive emergency power supplies are prone to operational errors due to poor lighting during use, such as reverse polarity connections, which may lead to short circuits and other hazards. In this embodiment, by automatically sensing the ambient light level, the intelligent sensing illumination circuit disposed on the battery clamp control box is activated in low-light environments to help users clearly identify the position and polarity of the clamps, thereby reducing the likelihood of incorrect connections during emergency operations. The auxiliary lighting enables operators to clearly distinguish the positive and negative terminals during wiring, reducing the risk of reverse-connection short circuits. Additionally, in this embodiment, the battery clamp control box wirelessly communicates with the main control unit of the emergency power supply for signal transmission, eliminating the need for physical wiring connections. This avoids the complexity of excessive cabling and potential issues such as poor contact. Such a design reduces wiring and contact problems common in traditional automotive emergency power supplies, enhancing operational convenience and safety. Furthermore, in this embodiment, the intelligent sensing illumination circuit is closely integrated with the emergency power supply through power management, enabling immediate activation of the optical sensing function after obtaining power. This ensures that the intelligent lighting not only responds to changes in ambient light but also guarantees rational power allocation, avoiding energy waste while meeting illumination requirements during emergency operations. Through this design, the battery clamp control box and the emergency power supply work in synergy to optimize power usage efficiency.

In some preferred embodiments, the battery clamp control box includes a battery clamp control chip U1, a wireless communication circuit, and a power output circuit. A chip connection terminal of the wireless communication circuit is connected to a wireless communication input control terminal of the battery clamp control chip U1. A wireless signal transceiver terminal of the wireless communication circuit is wirelessly connected to the main control unit of the emergency power supply. A chip connection terminal of the power output circuit is connected to the battery clamp control chip U1. A control terminal of the power output circuit is connected to the battery clamp. A power connection terminal of the power output circuit is connected to an emergency power supply B+. The wireless communication circuit, upon receiving an activation signal transmitted by the main control unit of the emergency power supply, transmits the starting activation signal to the battery clamp control chip U1 for identification and processing. The battery clamp control chip U1 controls the power output circuit to generate a power enable signal based on the starting activation signal and outputs the power enable signal to the battery clamp, thereby providing emergency starting power to the power terminal of the vehicle engine via the vehicle battery cable terminals. It should be noted that in this embodiment, the wireless communication circuit serves to establish a wireless connection between the battery clamp control box and the main control unit of the emergency power supply. Specifically, the wireless signal transceiver terminal of the wireless communication circuit wirelessly communicates with the main control unit of the emergency power supply to receive the starting activation signal transmitted by the main control unit. The starting signal activates the starting operation via wireless transmission. The wireless communication circuit transmits the received starting activation signal to the battery clamp control chip U1, which identifies and processes the signal. The battery clamp control chip U1 processes the starting activation signal from the wireless communication circuit, generates a control signal based on the signal, and controls the behavior of the power output circuit. The battery clamp control chip U1 determines whether to issue the power enable signal based on the received starting signal, ensuring the starting process follows predefined procedures. Under the control of the battery clamp control chip U1, the battery clamp control unit correctly operates the battery clamp according to signals from the main control unit of the emergency power supply. The power output circuit converts the control signal generated by the battery clamp control chip U1 into the power enable signal and outputs it to the battery clamp. The power connection terminal of the power output circuit is connected to the B+ terminal of the emergency power supply, and the power output circuit can utilize power from the emergency power supply during the starting process. When the battery clamp control chip U1 issues a start command based on the starting activation signal, the power output circuit ensures the signal is transmitted to the battery clamp to complete the starting operation. The battery clamp is the component ultimately electrically connected to the vehicle battery cable terminals and the vehicle engine. When the power output circuit sends the starting activation signal to the battery clamp, the battery clamp transfers power from the vehicle battery cable terminals to the vehicle engine to accomplish the starting task. It should be understood that in this embodiment, the battery clamp control box is set up in a way that the main control unit of the emergency power supply connects to the battery clamp control chip U1 through the wireless communication circuit, allowing the starting activation signal to be transmitted via wireless signals. This eliminates the need for complex physical connections during operation of the battery clamp, reduces wiring complexity, and enhances structural simplicity and safety. Wireless communication also effectively avoids traditional wiring issues such as poor contact and cable damage. After receiving the wireless signal, the battery clamp control chip U1 generates a starting signal through intelligent control. This not only reduces human operational errors but also improves the reliability of the starting process. The precise transmission of the starting activation signal ensures a high success rate for starting, particularly in emergency situations. Through the design of the battery clamp control box, the starting signal from the emergency power supply can be accurately identified and processed, thereby avoiding risks such as accidental activation or operational errors caused by improper handling in conventional emergency power supplies. The intelligent control ensures that the battery clamp executes the starting operation only upon receiving the correct starting signal, thereby enhancing safety.

In some preferred embodiments, the wireless communication circuit includes an optocoupler Q51 and a resistor R3. A receiver terminal of the optocoupler Q51 is wirelessly connected to a wireless signal transmission terminal of the main control unit of the emergency power supply. A ground terminal of the optocoupler Q51 is grounded. An output terminal of the optocoupler Q51 is connected to one terminal of the resistor R3. The other terminal of the resistor R3 serves as a chip connection terminal of the wireless communication circuit and a wireless communication input control terminal of the battery clamp control chip U1. It should be noted that the optocoupler Q51 is primarily configured to achieve signal isolation and transmission. The main control unit of the emergency power supply transmits a starting activation signal via wireless signals, which is received by the receiver terminal of the optocoupler Q51. Upon receiving the wireless optical signal, the optocoupler Q51 converts the optical signal into an electrical signal. The ground terminal of the optocoupler Q51 is grounded to ensure normal operation and signal stability. The electrical signal generated at the output terminal of the optocoupler Q51 is transmitted to downstream circuits via the resistor R3. The resistor R3 performs level adjustment on the electrical signal from photocoupler Q51. One terminal of the resistor R3 is connected to the output terminal of the optocoupler Q51, while the other terminal is connected to the wireless communication input control terminal of the battery clamp control chip U1. The resistor R3 ensures the signal strength and voltage meet the input requirements of the battery clamp control chip U1. By regulating the current and voltage of the signal, the resistor R3 adapts the signal to the operating conditions of subsequent circuits, preventing signal overdrive or undervoltage that could cause misidentification or damage to the battery clamp control chip U1. This configuration guarantees signal integrity. The electrical signal from the optocoupler Q51 is transmitted via the resistor R3 to the wireless communication input control terminal of the battery clamp control chip U1. Upon receiving the signal, the battery clamp control chip U1 identifies and processes it. Based on the received starting activation signal, the battery clamp control chip U1 generates a corresponding control signal to control the power output circuit, which then delivers a power enable signal to the battery clamp. Ultimately, emergency starting power is provided to the vehicle engine through the vehicle battery cable terminals. It should be understood that, during wireless communication, the signal transmission from the main control unit to the battery clamp control chip U1 incorporates isolation via the optocoupler, preventing interference from high voltages and electrical noise. This design protects the battery clamp control chip U1 from electrical surges and enhances the circuit's noise immunity. Additionally, the optocoupler effectively mitigates issues caused by ground potential differences between circuits, ensuring stable signal transmission. The integration of the optocoupler in the wireless communication circuit reduces wiring complexity compared to traditional circuits, eliminating cumbersome physical connections. Through wireless signal transmission, the battery clamp control chip U1 receives signals via the resistor R3 to control the starting operation. This simplified design minimizes potential issues such as poor wiring or contact failures, thereby improving circuit reliability.

In some preferred embodiments, the wireless communication circuit includes a resistor R29 and an optocoupler B51. One terminal of the resistor R29 is connected to a wireless communication output control terminal of the battery clamp control chip U1, and the other terminal of the resistor R29 is connected to an emitter terminal of the optocoupler B51. A ground terminal of the optocoupler B51 is grounded, and an output terminal of the optocoupler B51 is wirelessly connected to a wireless signal reception terminal of the main control unit of the emergency power supply. It should be noted that the resistor R29 is connected between the wireless communication output control terminal of the battery clamp control chip U1 and the emitter terminal of the optocoupler B51. During signal transmission, the resistor R29 regulates the current and voltage of the signal to meet the requirements of the optocoupler B51. By adjusting the signal level, the resistor R29 ensures that the signal output from the battery clamp control chip U1 can properly enter the optocoupler B51 without signal distortion or operational instability of the optocoupler due to excessive or insufficient current. The emitter terminal of the optocoupler B51 receives a control signal from the battery clamp control chip U1, converts the electrical signal into an optical signal, and transmits the optical signal to the main control unit of the emergency power supply, thereby achieving communication with the main control unit of the emergency power supply. In this embodiment, through the collaborative operation of the optocoupler B51 and the resistor R29, the signal transmitted from the battery clamp control chip U1 can be effectively delivered to the main control unit of the emergency power supply. This design simplifies signal transmission and avoids excessively complex wiring, thereby enhancing circuit reliability and operational convenience.

In some preferred embodiments, the power output circuit includes a resistor R27, a resistor R2, a MOSFET Q10, a resistor R26, a resistor R22, a resistor R1, a MOSFET Q6, a diode D3, and a relay KR. One terminal of the resistor R27 is connected to a control signal output terminal "Auxiliary testing" of the battery clamp control chip U1 and one terminal of the resistor R2. The other terminal of the resistor R2 is connected to a gate terminal of the MOSFET Q10, and a drain terminal of the MOSFET Q10 is connected to one terminal of the resistor R26. The other terminal of the resistor R26 is connected to one terminal of the resistor R22, a negative terminal P- of the battery clamp, and a normally open contact of the relay KR. A connection terminal of the resistor R22 is connected to a positive terminal P+ of the battery clamp. The other terminal of the resistor R27, a source terminal of the MOSFET Q10, one terminal of the resistor R1, a source terminal of the MOSFET Q6, and another normally open contact of the relay KR are all grounded. The other terminal of the resistor R1 is connected to a gate terminal of the MOSFET Q6. A drain terminal of the MOSFET Q6 is connected to a control terminal of the relay KR and an anode of the diode D3. A cathode of the diode D3 is connected to a power terminal of the relay KR and the emergency power supply B+. The normally open contact of the relay KR connected to the resistor R26 and the connection terminal of the resistor R22 connected to the positive terminal P+ of the battery clamp serve as a control terminal of the power output circuit. It should be noted that the signal input terminal of the power output circuit is one terminal of the resistor R27, which is connected to the control signal output terminal "Auxiliary testing" of the battery clamp control chip U1 and one terminal of the resistor R2. The control signal from the battery clamp control chip U1 is transmitted via the resistor R27 to the resistor R2, which then delivers the signal to the gate terminal of the MOSFET Q10 to control the switching state of the MOSFET Q10. Upon receiving the signal at the gate terminal, the MOSFET Q10 determines whether to conduct. When the MOSFET Q10 conducts, its drain current flows through the resistor R26, enters the relay KR and the negative terminal P- of the battery clamp, thereby establishing a current path and forming control of the starting signal. The other terminal of the resistor R26 is connected to one terminal of the resistor R22, and the connection terminal of the resistor R22 is connected to the positive terminal P+ of the battery clamp. Through the series connection of resistors R26 and R22, the correct connection of the positive and negative terminals is ensured, and the output of the power enable signal is controlled. Additionally, the MOSFET Q6 participates in the signal switching process. The gate terminal of the MOSFET Q6 receives a signal from the resistor R1, while the other terminal of the resistor R1 is connected to the source terminal of the MOSFET Q10. The source terminal of the MOSFET Q6, the resistor R1, and the normally open contact of the relay KR are all grounded. When the MOSFET Q6 conducts, it connects the control terminal of the relay KR to the anode of the diode D3, thereby completing the output of the power enable signal. In the power output circuit, the relay KR acts as a control element, with its normally open contact connected to the positive terminal P+ of the battery clamp. The control terminal of the relay KR is driven by the MOSFET Q6 and the diode D3, which together control the relay's activation. When the control signal is received, the relay KR closes the normally open contact, thereby completing current conduction and ultimately supplying the emergency starting current to the battery clamp. The diode D3 serves as a protective component, preventing reverse current flow in the relay KR. During switching of the relay KR, the diode D3 effectively protects the circuit from potential reverse voltage, protecting other components in the circuit from damage. The control terminal of the power output circuit is formed by the resistor R26, the normally open contact of the relay KR, and the connection terminal of the resistor R22. After the control signal in the power output circuit is switched by the MOSFETs Q10 and Q6, the normally open contact of the relay KR closes, the current flows through the positive terminal P+ and negative terminal P- of the battery clamp, ultimately providing the emergency starting current to the vehicle engine. In this embodiment, the power output circuit precisely controls the output of the power enable signal through the switching operations of the MOSFETs Q10 and Q6, the control of the relay KR, and the protection provided by the diode D3. When the battery clamp control chip U1 sends a starting signal, the power output circuit ensures accurate and reliable transmission of current to the battery clamp through the collaboration of the aforementioned components, thereby achieving emergency starting of the vehicle engine. The diode D3 plays a critical protective role in the circuit by preventing damage caused by reverse voltage generated during the switching of the relay KR. Such protection enhances circuit safety, particularly under conditions such as reverse current or surges that may occur during vehicle starting, thereby avoiding damage to other circuit components. The power output circuit employs a combination of MOSFETs and the relay to achieve precise switching of the power enable signal, ensuring circuit reliability. The switching functionality of the MOSFETs, combined with the control action of the relay, guarantees smooth current transmission to the battery clamp during emergencies, preventing startup failures due to poor contact or circuit malfunctions.

In some preferred embodiments, a physical start switch is disposed on the battery clamp control box. After the battery clamp is electrically connected to the vehicle battery cable terminals, the battery clamp control box receives a starting activation signal transmitted by the main control unit of the emergency power supply based on a pressing signal of the physical start switch, generates a power enable signal based on the starting activation signal, and transmits the power enable signal to the battery clamp to provide emergency starting power to the power terminal of the vehicle engine via the vehicle battery cable terminals. Further, the physical start switch includes a light-transmitting cover. The intelligent sensing illumination circuit is disposed below the light-transmitting cover. The intelligent sensing illumination circuit is electrically connected to the emergency power supply via the battery clamp control box to obtain power supply therefrom, automatically detects an ambient brightness level of a current environment where the battery clamp is located, and provides auxiliary operational lighting during the emergency starting operation according to the ambient brightness level. It should be noted that the physical start switch is a manual control switch used to activate the intelligent clamp in emergency situations. When a user presses the physical start switch, it sends a pressing signal to the battery clamp control box. This signal serves as an activation signal of the physical switch, indicating that the user intends to initiate the emergency starting process. The pressing signal may be a low-voltage signal transmitted directly to an input terminal of the battery clamp control chip U1 or relayed to a control system of the battery clamp control box through other circuits.

In some preferred embodiments, the battery clamp control box further includes a status indication circuit. The status indication circuit flashes light to indicate an operating state of the battery clamp control box.

In further preferred embodiments, the status indication circuit includes a capacitor C6, a light-emitting diode LED1, a light-emitting diode LED2, a resistor R10, and a resistor R11. One terminal of the capacitor C6, an anode of the light-emitting diode LED1, and an anode of the light-emitting diode LED2 are all connected to a VCC connection terminal of the battery clamp control chip U1. The VCC connection terminal of the battery clamp control chip U1 is connected to a power supply VCC. A cathode of the light-emitting diode LED1 is connected to one status indication control terminal of the battery clamp control chip U1 via the resistor R10, and a cathode of the light-emitting diode LED2 is connected to another status indication control terminal of the battery clamp control chip U1 via the resistor R11. It should be noted that the capacitor C6, the anode of the light-emitting diode LED1, and the anode of the light-emitting diode LED2 are all connected to the VCC connection terminal of the battery clamp control chip U1. The VCC terminal is connected to the power supply VCC to provide electrical support for the circuit. The anodes of the light-emitting diodes LED1 and LED2 are connected to the same VCC terminal, and the cathodes of LED1 and LED2 are connected to the status indication control terminals of the battery clamp control chip U1 via the resistors R10 and R11, respectively. When the status indication control terminals of the battery clamp control chip U1 output signals, they control the illumination and extinguishing states of LED1 and LED2 as feedback signals for user operations. Specific flashing patterns or illumination states reflect the current status of the intelligent clamp, such as startup success or failure, waiting for operation, etc. The capacitor C6 stabilizes current and filters noise to ensure a steady power supply voltage for the circuit. It also cooperates with the flashing behavior of LED1 and LED2 to control the flashing cycle or delay. The capacitor C6 helps eliminate transient signal fluctuations, ensures more stable operation of the LEDs, and influences the flashing frequency of the LEDs to provide clear visual feedback. The battery clamp control chip U1 generates corresponding signals through the status indication control terminals based on detected states (e.g., whether the engine is successfully started, whether user operation is required). These signals control the working modes of LED1 and LED2. For example, LED1 indicates a "startup failure" status, while LED2 indicates a "startup success" status.

In further preferred embodiments, the battery clamp control box further includes a load check circuit. The load check circuit includes a first load check circuit and a second load check circuit. The first load check circuit includes a resistor R17, a resistor R5, a resistor R15, a resistor R7, a Zener diode ZD3, and a capacitor C5. One terminal of the resistor R17, a cathode of the Zener diode ZD3, and a positive terminal of the capacitor C5 are connected to a first load check control terminal of the battery clamp control chip U1. The other terminal of the resistor R17 is connected to one terminal of the resistor R5 and one terminal of the resistor R7. The other terminal of the resistor R5 is connected to a negative terminal P- of the battery clamp via the resistor R15. An anode of the Zener diode ZD3, a negative terminal of the capacitor C5, and the other terminal of the resistor R7 are all grounded. The second load check circuit includes a resistor R16, a resistor R8, a capacitor C3, and a Zener diode ZD1. One terminal of the resistor R16, one terminal of the resistor R8, a positive terminal of the capacitor C3, and a cathode of the Zener diode ZD1 are connected to a second load check control terminal of the battery clamp control chip U1. The other terminal of the resistor R16 is connected to the negative terminal P-of the battery clamp. The other terminal of the resistor R8, a negative terminal of the capacitor C3, and an anode of the Zener diode ZD1 are all grounded. It should be noted that the first load check circuit consists of the resistor R17, resistor R5, resistor R15, resistor R7, Zener diode ZD3, and capacitor C5. Its primary function is to monitor load current and voltage and determine the operational state of the system. One terminal of the resistor R17, the cathode of the Zener diode ZD3, and the positive terminal of the capacitor C5 are connected to the first load check control terminal of the battery clamp control chip U1. These components collectively monitor voltage variations and current characteristics in the circuit to assess whether the load is operating normally. The other terminal of the resistor R17 is connected to one terminal of the resistor R5 and one terminal of the resistor R7. The other terminal of the resistor R5 is connected to a negative terminal P- of the battery clamp via the resistor R15. This configuration forms a current path to monitor changes in voltage and current. The anode of the Zener diode ZD3 and the negative terminal of the capacitor C5 are both grounded to stabilize the voltage in the circuit and prevent voltage fluctuations from affecting the performance of the load check circuit. The Zener diode maintains the voltage within a specific range, ensuring the load check circuit operates under stable conditions. The capacitor C5 is used for filtering to reduce interference caused by power supply fluctuations or load variations, thereby stabilizing the signal. Additionally, the second load check circuit consists of the resistor R16, the resistor R8, the capacitor C3, and the Zener diode ZD1. It functions similarly to the first load check circuit and is primarily used to further detect the load state, ensuring accurate judgment of the load condition. One terminal of the resistor R16, one terminal of the resistor R8, the positive terminal of the capacitor C3, and the cathode of the Zener diode ZD1 are connected to the second load check control terminal of the battery clamp control chip U1. These components form a second monitoring channel to further verify the load status. The other terminal of the resistor R16 is connected to the negative terminal P- of the battery clamp, ensuring electrical connection between the load check circuit, the battery clamp, and the vehicle battery cable terminals. The anode of the Zener diode ZD1, the negative terminal of the capacitor C3, and the other terminal of the resistor R8 are all grounded, further stabilizing the voltage and reducing the impact of power supply fluctuations on the load check circuit. The capacitor C3 filters out interference signals, improving the precision of load check. In this embodiment, the load check circuit accurately determines whether sufficient power is delivered to the vehicle engine by monitoring current and voltage changes, ensuring adequate current supply during emergency starting. The first and second load check circuits collaborate to enhance reliability through dual monitoring. Even if one circuit malfunctions, the other continues operating, providing redundant checking. By integrating the Zener diodes (ZD3, ZD1) and capacitors (C5, C3), the load check circuit stabilizes voltage, filters noise interference, and mitigates voltage fluctuations, thereby improving circuit stability and reliability. This stability is particularly critical for emergency power systems, as voltage and current fluctuations during vehicle starting may affect system performance. The load check circuit ensures the power supply delivers sufficient current under stable operating conditions.

In further preferred embodiments, the battery clamp control box further includes a buzzer control circuit. The buzzer control circuit includes a resistor R18, a transistor Q9, a buzzer BEE, and a resistor R19. One terminal of the resistor R18 is connected to a buzzer control terminal of the battery clamp control chip U1, and the other terminal of the resistor R18 is connected to a base terminal of the transistor Q9. An emitter terminal of the transistor Q9 is grounded, and a collector terminal of the transistor Q9 is connected to one terminal of the buzzer BEE. The other terminal of the buzzer BEE is connected to one terminal of the resistor R19, and the other terminal of the resistor R19 is connected to the positive terminal P+ of the battery clamp. It should be noted that one terminal of the resistor R18 is connected to the buzzer control terminal of the battery clamp control chip U1, and the other terminal is connected to the base terminal of the transistor Q9. The battery clamp control chip U1 triggers the operation of the buzzer by controlling the output signal at the buzzer control terminal. When the battery clamp control chip U1 sends a signal to the buzzer control terminal, the resistor R18 limits the current flowing through the base terminal of the transistor Q9. The operation of the transistor Q9 depends on the base current. When the base current reaches a specific threshold, the transistor Q9 conducts. The emitter terminal of the transistor Q9 is grounded, and the collector terminal is connected to one terminal of the buzzer BEE. The transistor Q9 acts as a switch to control the activation and deactivation of the buzzer. When the transistor Q9 conducts, the current path of the buzzer BEE is completed, the buzzer operates and emits sound. The operating state of the transistor Q9 is controlled by the buzzer control terminal of the battery clamp control chip U1, regulates the base current via the resistor R18, thereby determining whether the transistor Q9 conducts. The other terminal of the buzzer BEE is connected to the positive terminal P+ of the battery clamp via the resistor R19. When the transistor Q9 conducts, the buzzer BEE is connected to the positive terminal P+ via the resistor R19, completing the circuit and activating the buzzer's sound-emitting function. The buzzer BEE generates an audio signal based on the signal from the battery clamp control chip U1, which is used to alert the user to the starting status. The buzzer control circuit provides audio feedback, enabling the user to perceive the system status through sound. This audio feedback is particularly critical during emergency starting operations, especially in noisy environments, as users can clearly determine whether the system is functioning properly by hearing the buzzer's sound. For example, when the system starts normally, the buzzer may emit a continuous tone; if the system detects an issue or requires user intervention, the buzzer may produce intermittent beeps or warning tones to alert the user, which helps the user identify operational issues. In this embodiment, the buzzer control circuit has a simplified structure. The transistor Q9 acts as a switch to control the buzzer's on/off state, avoiding complex circuitry. The use of resistors R18 and R19 to regulate current and the transistor as a switching component enhances circuit efficiency and stability. The simple circuit design reduces costs and potential failure points, improving system reliability.

In further preferred embodiments, the intelligent sensing illumination circuit includes a photoresistor R33, a resistor R25, a resistor R37, a MOSFET Q3, a resistor R28, a resistor R32, a MOSFET Q2, a light-emitting diode LED3, a light-emitting diode LED4, a light-emitting diode LED5, and a light-emitting diode LED6. One terminal of the photoresistor R33, one terminal of the resistor R25, and a source terminal of the MOSFET Q3 are all connected to the emergency power supply B+. The other terminal of the photoresistor R33 is connected to a gate terminal of the MOSFET Q3 and one terminal of the resistor R37. The other terminal of the resistor R37 is grounded. A drain terminal of the MOSFET Q3 is connected to one terminal of the resistor R32 and a gate terminal of the MOSFET Q2 via the resistor R28. The other terminal of the resistor R32 and a source terminal of the MOSFET Q2 are grounded. A drain terminal of the MOSFET Q2 is connected to a cathode of the light-emitting diode LED6. An anode of the light-emitting diode LED6 is connected to a cathode of the light-emitting diode LED5. An anode of the light-emitting diode LED5 is connected to a cathode of the light-emitting diode LED4. An anode of the light-emitting diode LED4 is connected to a cathode of the light-emitting diode LED3. An anode of the light-emitting diode LED3 is connected to the other terminal of the resistor R25. It should be noted that the photoresistor R33 operates by varying its resistance based on ambient light intensity. One terminal of the photoresistor is connected to the emergency power supply B+, while the other terminal is connected to the gate terminal of the MOSFET Q3. It should be noted that when ambient light is strong, the resistance of the photoresistor R33 decreases; when light is weak, the resistance increases. This allows the photoresistor R33 to detect changes in ambient light and provide feedback signals to subsequent circuitry. The source terminal of the MOSFET Q3 is connected to the emergency power supply B+, and its gate terminal is connected to the other terminal of the photoresistor R33 and resistor R37. When the photoresistor R33 detects strong light, the gate voltage of the MOSFET Q3 changes, altering the drain current flow and thereby controlling the behavior of subsequent circuits. In low-light conditions (i.e., when the photoresistor's resistance is high), the MOSFET Q3 conducts more readily, allowing current to flow through downstream components. This combination of the photoresistor and MOSFET Q3 enables current regulation based on ambient brightness. The resistor R28, connected to the drain terminal of the MOSFET Q3, further regulates current flow. The resistors R25 and R32 provide current distribution and stabilization at different circuit nodes to ensure proper operation. The resistor R32 is also connected to the source terminal of the MOSFET Q2 and ground, assisting in controlling the operating state of the MOSFET Q2. The gate terminal of the MOSFET Q2 is connected to the drain terminal of the MOSFET Q3, governing the switching state of the MOSFET Q2. When the MOSFET Q2 conducts, current flows sequentially through LED6, LED5, LED4, and LED3, illuminating these LEDs in a cascaded manner to create auxiliary lighting. The cascaded connection of LEDs (LED6 to LED3) produces a gradual brightness increase or a current-dependent illumination effect. This design automatically adjusts LED brightness or activates different numbers of LEDs based on ambient light intensity. In low-light conditions (high resistance of the photoresistor R33), the MOSFET Q3 conducts, activating the MOSFET Q2 and enabling LED illumination. The brightness of the LEDs is directly correlated with the current controlled by the operating state of the MOSFET Q3, ensuring appropriate lighting intensity. It is understood that, in this embodiment, the intelligent sensing illumination circuit automatically adjusts the lighting brightness according to ambient light intensity. When ambient light is dim, the LEDs are automatically illuminated with enhanced brightness to assist users in performing emergency starting operations in low-light environments. Conversely, when ambient light is strong, the circuit reduces the brightness of the LEDs or turns them off to avoid power waste. This automatic lighting adjustment ensures users receive appropriate illumination during operations, whether in darkness or low-light conditions, thereby improving operational accuracy and safety. The intelligent sensing illumination circuit provides auxiliary lighting during emergency starting operations, ensuring users can clearly observe the connection terminals of the battery clamp and the starting process in urgent situations. This reduces safety risks caused by improper operation or insufficient illumination. In emergency scenarios, clear visibility is critical for correct operation. The intelligent sensing illumination circuit optimizes lighting through automatic brightness adjustment, enabling users to perform operations with greater clarity.

It should be noted that the above embodiments are merely illustrative of the technical solutions of the present disclosure rather than limiting its scope. Although the present disclosure has been described in detail with reference to the foregoing embodiments, those of ordinary skill in the art will appreciate that modifications may still be made to the technical solutions described in the foregoing embodiments, or equivalent substitutions may be applied to some or all of the technical features. Such modifications or substitutions do not cause the essence of the corresponding technical solutions to depart from the scope of the technical solutions defined by the embodiments of the present disclosure.

## Claims

1. An intelligent automotive emergency start clamp with optical sensing illumination, comprising:
a battery clamp (100), configured to electrically connect to vehicle battery cable terminals during an emergency starting operation of a vehicle, wherein the vehicle battery cable terminals are electrically connected to a vehicle engine;
a battery clamp control box (200), configured to electrically connect to an emergency power supply during the emergency starting operation and to wirelessly communicate with a main control unit of the emergency power supply, wherein the battery clamp control box (200) receives a starting activation signal transmitted by the main control unit of the emergency power supply, generates a power enable signal based on the starting activation signal, and transmits the power enable signal to the battery clamp (100) to provide emergency starting power to a power terminal of the vehicle engine via the vehicle battery cable terminals; and
an intelligent sensing illumination circuit (300), disposed on the battery clamp control box (200) and electrically connected to the emergency power supply to obtain power supply therefrom, wherein the intelligent sensing illumination circuit (300) automatically detects an ambient brightness level of a current environment where the battery clamp (100) is located after obtaining the power supply from the emergency power supply, and provides auxiliary operational lighting during the emergency starting operation according to the ambient brightness level.

2. The intelligent automotive emergency start clamp with optical sensing illumination according to claim 1, wherein the battery clamp control box (200) comprises a battery clamp control chip (U1), a wireless communication circuit, and a power output circuit; a chip connection terminal of the wireless communication circuit is connected to a wireless communication input control terminal of the battery clamp control chip (U1), and a wireless signal transceiver terminal of the wireless communication circuit is wirelessly connected to the main control unit of the emergency power supply; a chip connection terminal of the power output circuit is connected to the battery clamp control chip (U1), and a control terminal of the power output circuit is connected to the battery clamp (100); and a power connection terminal of the power output circuit is connected to an emergency power supply (B+).

3. The intelligent automotive emergency start clamp with optical sensing illumination according to claim 2, wherein the wireless communication circuit, upon receiving the starting activation signal transmitted by the main control unit of the emergency power supply, transmits the starting activation signal to the battery clamp control chip (U1) for identification and processing, the battery clamp control chip (U1) controls the power output circuit to generate the power enable signal based on the starting activation signal and outputs the power enable signal to the battery clamp (100) to provide the emergency starting power to the power terminal of the vehicle engine via vehicle battery cable terminals.

4. The intelligent automotive emergency start clamp with optical sensing illumination according to claim 3, wherein the wireless communication circuit comprises an optocoupler (Q51), and a resistor (R3); a receiver terminal of the optocoupler (Q51) is wirelessly connected to a wireless signal transmission terminal of the main control unit of the emergency power supply, a ground terminal of the optocoupler (Q51) is grounded, an output terminal of the optocoupler (Q51) is connected to one terminal of the resistor (R3), an other terminal of the resistor (R3) serves as the chip connection terminal of the wireless communication circuit and the wireless communication input control terminal of the battery clamp control chip (U1).

5. The intelligent automotive emergency start clamp with optical sensing illumination according to claim 3, wherein the wireless communication circuit comprises a resistor (R29) and an optocoupler (B51); one terminal of the resistor (R29) is connected to a wireless communication output control terminal of the battery clamp control chip (U1), an other terminal of the resistor (R29) is connected to an emitter terminal of the optocoupler (B51), a ground terminal of the optocoupler (B51) is grounded, and an output terminal of the optocoupler (B51) is wirelessly connected to a wireless signal reception terminal of the main control unit of the emergency power supply.

6. The intelligent automotive emergency start clamp with optical sensing illumination according to claim 2, wherein the power output circuit comprises a resistor (R27), a resistor (R2), a MOSFET (Q10), a resistor (R26), a resistor (R22), a resistor (R1), a MOSFET (Q6), a diode (D3), and a relay (KR); one terminal of the resistor (R27) is connected to a control signal output terminal (Auxiliary testing) of the battery clamp control chip (U1) and one terminal of the resistor (R2), an other terminal of the resistor (R2) is connected to a gate terminal of the MOSFET (Q10), and a drain terminal of the MOSFET (Q10) is connected to one terminal of the resistor (R26); an other terminal of the resistor (R26) is connected to one terminal of the resistor (R22), a negative terminal (P-) of the battery clamp (100), and a normally open contact of the relay (KR), and a connection terminal of the resistor (R22) is connected to a positive terminal (P+) of the battery clamp (100); an other terminal of the resistor (R27), a source terminal of the MOSFET (Q10), one terminal of the resistor (R1), a source terminal of the MOSFET (Q6), and another normally open contact of the relay (KR) are all grounded; an other terminal of the resistor (R1) is connected to a gate terminal of the MOSFET (Q6), a drain terminal of the MOSFET (Q6) is connected to a control terminal of the relay (KR) and an anode of the diode (D3), and a cathode of the diode (D3) is connected to a power terminal of the relay (KR) and the emergency power supply (B+); the normally open contact of the relay (KR) connected to the resistor (R26) and the connection terminal of the resistor (R22) connected to the positive terminal (P+) of the battery clamp (100) serve as the control terminal of the power output circuit.

7. The intelligent automotive emergency start clamp with optical sensing illumination according to claim 6, wherein the positive terminal (P+) of the battery clamp (100), the negative terminal (P-) of the battery clamp (100), and the vehicle battery cable terminals are electrically connected.

8. The intelligent automotive emergency start clamp with optical sensing illumination according to claim 1, wherein a physical start switch is disposed on the battery clamp control box (200); after the battery clamp (100) and the vehicle battery cable terminals are electrically connected, the battery clamp control box (200), based on a pressing signal of the physical start switch, receives the starting activation signal transmitted by the main control unit of the emergency power supply, generates the power enable signal based on the starting activation signal, and transmits the power enable signal to the battery clamp (100) to provide the emergency starting power to the power terminal of the vehicle engine via the vehicle battery cable terminals.

9. The intelligent automotive emergency start clamp with optical sensing illumination according to claim 8, wherein the physical start switch comprises a light-transmitting cover, the intelligent sensing illumination circuit (300) is disposed below the light-transmitting cover, the intelligent sensing illumination circuit (300) is electrically connected to the emergency power supply via the battery clamp control box (200) to obtain the power supply therefrom, the intelligent sensing illumination circuit (300) automatically detects the ambient brightness level of the current environment where the battery clamp (100) is located and provides the auxiliary operational lighting during the emergency starting operation according to the ambient brightness level.

10. The intelligent automotive emergency start clamp with optical sensing illumination according to claim 8, wherein the battery clamp control box (200) further comprises a status indication circuit, the status indication circuit flashes light to indicate an operating state of the battery clamp control box (200).

11. The intelligent automotive emergency start clamp with optical sensing illumination according to claim 10, wherein the status indication circuit comprises a capacitor (C6), a light-emitting diode (LED1), a light-emitting diode (LED2), a resistor (R10), and a resistor (R11); one terminal of the capacitor (C6), an anode of the light-emitting diode (LED1), and an anode of the light-emitting diode (LED2) are all connected to a VCC connection terminal of the battery clamp control chip (U1), and the VCC connection terminal of the battery clamp control chip (U1) is connected to a power supply (VCC); and a cathode of the light-emitting diode (LED1) is connected to one status indication control terminal of the battery clamp control chip (U1) via the resistor (R10), and a cathode of the light-emitting diode (LED2) is connected to one status indication control terminal of the battery clamp control chip (U1) via the resistor (R11).

12. The intelligent automotive emergency start clamp with optical sensing illumination according to claim 11, wherein the light-emitting diode (LED1) is configured to indicate a startup failure status, and the light-emitting diode (LED2) is configured to indicate a startup success status.

13. The intelligent automotive emergency start clamp with optical sensing illumination according to claim 7, wherein the battery clamp control box (200) further comprises a load check circuit; the load check circuit comprises a first load check circuit and a second load check circuit; the first load check circuit comprises a resistor (R17), a resistor (R5), a resistor (R15), a resistor (R7), a Zener diode (ZD3), and a capacitor (C5); one terminal of the resistor (R17), a cathode of the Zener diode (ZD3), and a positive terminal of the capacitor (C5) are connected to a first load check control terminal of the battery clamp control chip (U1); an other terminal of the resistor (R17) is connected to one terminal of the resistor (R5) and one terminal of the resistor (R7), an other terminal of the resistor (R5) is connected to the negative terminal (P-) of the battery clamp (100) via the resistor (R15); an anode of the Zener diode (ZD3), a negative terminal of the capacitor (C5), and an other terminal of the resistor (R7) are all grounded; the second load check circuit comprises a resistor (R16), a resistor (R8), a capacitor (C3), and a Zener diode (ZD1); one terminal of the resistor (R16), one terminal of the resistor (R8), a positive terminal of the capacitor (C3), and a cathode of the Zener diode (ZD1) are connected to a second load check control terminal of the battery clamp control chip (U1); an other terminal of the resistor (R16) is connected to the negative terminal (P-) of the battery clamp (100); and an other terminal of the resistor (R8), a negative terminal of the capacitor (C3), and an anode of the Zener diode (ZD1) are all grounded.

14. The intelligent automotive emergency start clamp with optical sensing illumination according to claim 13, wherein the battery clamp control box (200) further comprises a buzzer control circuit; the buzzer control circuit comprises a resistor (R18), a transistor (Q9), a buzzer (BEE), and a resistor (R19); one terminal of the resistor (R18) is connected to a buzzer control terminal of the battery clamp control chip (U1), an other terminal of the resistor (R18) is connected to a base terminal of the transistor (Q9), an emitter terminal of the transistor (Q9) is grounded, and a collector terminal of the transistor (Q9) is connected to one terminal of the buzzer (BEE), an other terminal of the buzzer (BEE) is connected to one terminal of the resistor (R19), and an other terminal of the resistor (R19) is connected to the positive terminal (P+) of the battery clamp (100).

15. The intelligent automotive emergency start clamp with optical sensing illumination according to claim 14, wherein the intelligent sensing illumination circuit (300) comprises a photoresistor (R33), a resistor (R25), a resistor (R37), a MOSFET (Q3), a resistor (R28), a resistor (R32), a MOSFET (Q2), a light-emitting diode (LED3), a light-emitting diode (LED4), a light-emitting diode (LED5), and a light-emitting diode (LED6); one terminal of the photoresistor (R33), one terminal of the resistor (R25), and a source terminal of the MOSFET (Q3) are all connected to the emergency power supply (B+); an other terminal of the photoresistor (R33) is connected to a gate terminal of the MOSFET (Q3) and one terminal of the resistor (R37), an other terminal of the resistor (R37) is grounded; a drain terminal of the MOSFET (Q3) is connected to one terminal of the resistor (R32) and a gate terminal of the MOSFET (Q2) via the resistor (R28), an other terminal of the resistor (R32) and a source terminal of the MOSFET (Q2) are grounded; a drain terminal of the MOSFET (Q2) is connected to a cathode of the light-emitting diode (LED6), an anode of the light-emitting diode (LED6) is connected to a cathode of the light-emitting diode (LED5), an anode of the light-emitting diode (LED5) is connected to a cathode of the light-emitting diode (LED4), an anode of the light-emitting diode (LED4) is connected to a cathode of the light-emitting diode (LED3), and an anode of the light-emitting diode (LED3) is connected to the other terminal of the resistor (R25).
